# EUROPEAN PATENT SPECIFICATION

(11) **EP 1 374 670 B1**
(45) Date of publication and mention of the grant of the patent: **13.06.2007**
(21) Application number: 03076157.1
(22) Date of filing: 22.04.2003
(51) Int. Cl.: A01J 7/02, A01K 1/12

(54) **A cleaning device**
Reinigungsvorrichtung
Dispositif de nettoyage

(30) Priority: 25.06.2002 NL 1020934
(43) Date of publication of application: 02.01.2004
(73) Proprietor: Lely Enterprises AG, 6300 ZUG (CH)
(72) Inventor: Fransen, Renatus Ignatius Josephus, 3135 ZD Vlaardingen (NL)
(74) Representative: Corten, Maurice Jean F.M.

(56) References cited:
- EP-A- 0 270 165
- US-A- 4 685 422

## Description

The invention relates to a cleaning device for cleaning the exterior of at least a part of a milking parlour, the milking parlour comprising a milking robot and a bottom on which an animal to be milked can stand.

Such a known cleaning device is constituted by a hose that is manually operated by a farmer and through which cleaning liquid is squirted. This operation of the cleaning device is time-consuming and cumbersome. As a result thereof it sometimes happens that a farmer has not sufficient time for cleaning the milking parlour, which may have a negative effect on the hygienic conditions.

It is an object of the present invention to provide a cleaning device obviating said drawback at least partially.

For this purpose, according to the invention a cleaning device of the above-described type is characterized in that the cleaning device is provided with a source of cleaning foam. Such a cleaning foam, which is known per se, may ensure an extremely hygienic cleaning of the milking parlour.

The cleaning device is preferably an automatic cleaning device.

An improved cleaning is obtained if the cleaning device comprises an element for bringing the cleaning foam under pressure, such as for example a pump.

The cleaning device preferably comprises a nozzle that is disposed in a fixed position relative to the milking parlour. For obtaining a desired cleaning, it is desirable in some cases to use several nozzles that are fastened in different places. The operation or control of the several nozzles can then be attuned to each other, for example be software-controlled.

The entire milking parlour can be cleaned in a simple manner if the nozzle is movably disposed relative to the milking parlour. The nozzle may for example be fastened to a rail whilst being movable along said rail.

An extremely efficient cleaning can be obtained if the nozzle is fastened to a robot arm. Such a robot arm may be equipped with a gripper for gripping the nozzle.

Although the nozzle may be rigidly suspended, for example in a fixed position relative to the robot arm, it is advantageous if the nozzle is movably suspended. This makes it possible to obtain a larger cleaning range.

There are preferably provided contents-measuring means for measuring the contents of the source containing the cleaning foam. The contents-measuring means are capable of emitting a control signal respectively an indication signal for automatic control of interchanging the source respectively for giving an indication to a farmer, for example on a display, via a sound, or via the mobile telephone of the relevant farmer, or to a service department.

In order to achieve that the cleaning is performed at a suitable point of time, a preferred embodiment of a cleaning device according to the invention is characterized in that the cleaning device is provided with a presence-detecting device for detecting the presence of an animal in the milking parlour, the presence-detecting device, upon detection of an animal in the milking parlour, emitting a signal to the cleaning device, which signal stops or prevents the operation of the cleaning device.

For cleaning in a simple manner only in the case of necessity, there is preferably provided a cleanliness-detecting device for detecting the cleanliness of the milking parlour, the cleaning device being controlled with the aid of data from the cleanliness-detecting device. The cleanliness-detecting device may also be used for checking the effect of the foam-cleaning, possibly including rinsing, and for foam-cleaning again, if desired, depending on the result of the checking.

For preventing an animal from entering the milking parlour during cleaning, the cleaning device comprises a closing element for closing the entrance to the milking parlour when the cleaning device is in operation.

The cleaning device preferably comprises a rinsing device for rinsing the exterior of the milking parlour after foam-cleaning. As a result thereof the hygienic conditions of the milking parlour are further improved.

The cleaning device is preferably provided with an additive element for adding additives to the cleaning foam, so that for a specific cleaning a specific additive can be used, for example for dissolving or soaking particular impurities. In this connection disinfecting means and the like may be taken into consideration. Adding additives preferably takes place automatically. For example, after a predetermined number of normal cleanings, there may each time be performed a cleaning with a specific additive.

The invention also relates to a method of cleaning the exterior of at least a part of a milking parlour, the milking parlour comprising a milking robot and a bottom on which an animal to be milked can stand, characterized in that the method comprises the step of applying a cleaning foam on at least said part of the milking parlour. As part is preferably chosen the lower part of the milking robot.

The invention will be explained hereinafter in further detail with reference to the drawing, in which:
Figure 1 is a schematic side view of an embodiment of a cleaning device according to the invention;
Figure 2 is a schematic side view of an alternative embodiment of a cleaning device according to the invention;
Figure 3 is a schematic plan view of the embodiment according to Figure 2;
Figure 4 is a schematic plan view of a further alternative embodiment of a cleaning device according to the invention, and
Figure 5 is a schematic plan view of another further alternative embodiment of a cleaning device according to the invention.

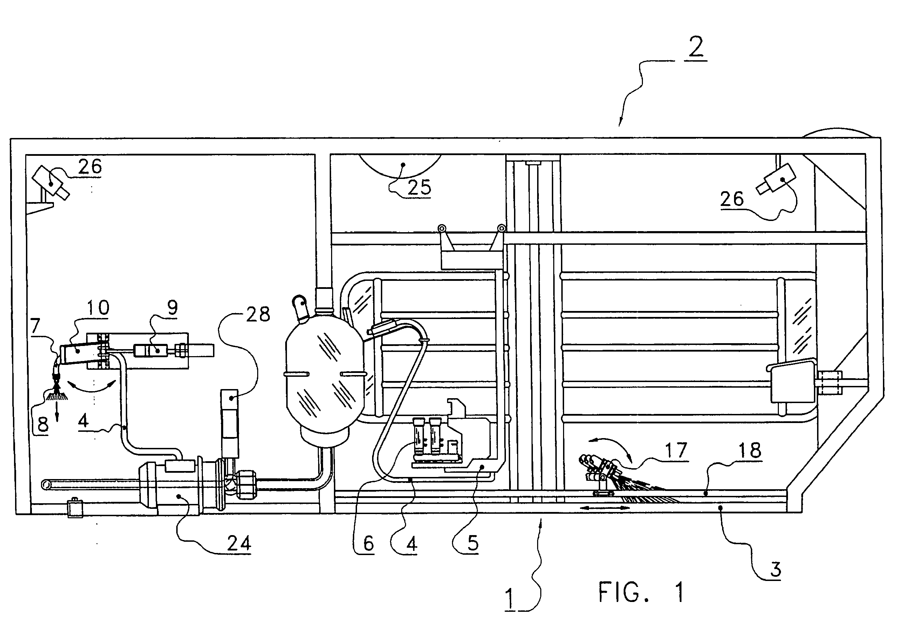

Figure 1 is a schematic side view of a milking parlour 1. The milking parlour 1 comprises inter alia a milking robot 2 and a bottom 3 on which an animal to be milked can stand. The milking robot 2 is provided with a rinsing device 4 for cleaning the interior of the milking robot 2 by means of rinsing liquid. The rinsing device 4 rinses and cleans in particular the components of the milking robot 2 that come into contact with milk, such as milk lines and the like. The milking robot 2 further comprises a robot arm 5 for carrying inter alia teat cups 6.

The invention relates to a cleaning device, in particular an automatic cleaning device, for cleaning the exterior of the milking parlour 1 by means of a cleaning foam. A few embodiments of such an automatic cleaning device will be described hereinafter. In the embodiments shown in the figures, reference numeral 28 indicates a source of cleaning foam, which cleaning foam is pumped under pressure, for example by means of a pump 24 and the line 4, to the nozzle 8, where the foam is applied over at least a part of the milking parlour, in particular the lower part of the milking robot.

Figure 1 shows an embodiment in which it is possible to perform a rinsing-cleaning after the foam-cleaning. In this case rinsing liquid coming from the milking robot 2 is used as rinsing liquid for the exterior of the milking parlour 1. Guide means 7 guide the rinsing liquid to a nozzle 8 constituting an outlet of the cleaning device. Said guide means 7 and said nozzle 8 are disposed on a movable separation arm 10 driven by a cylinder 9.

The separation arm 10 is movable in a reciprocating manner by operating the cylinder 9, so that a larger surface of the exterior of the milking parlour 1 can be cleaned.

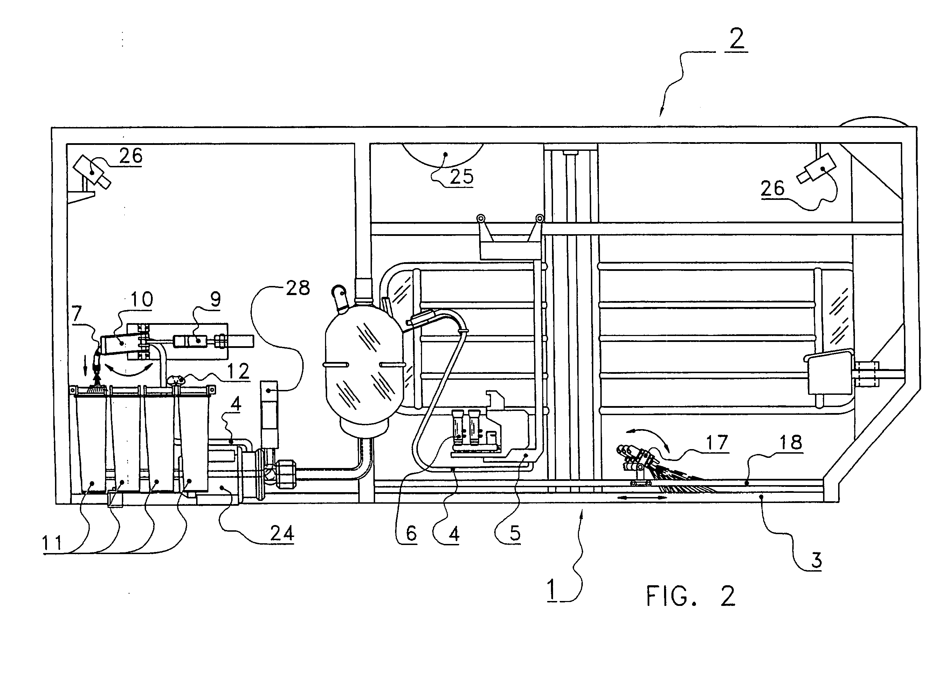

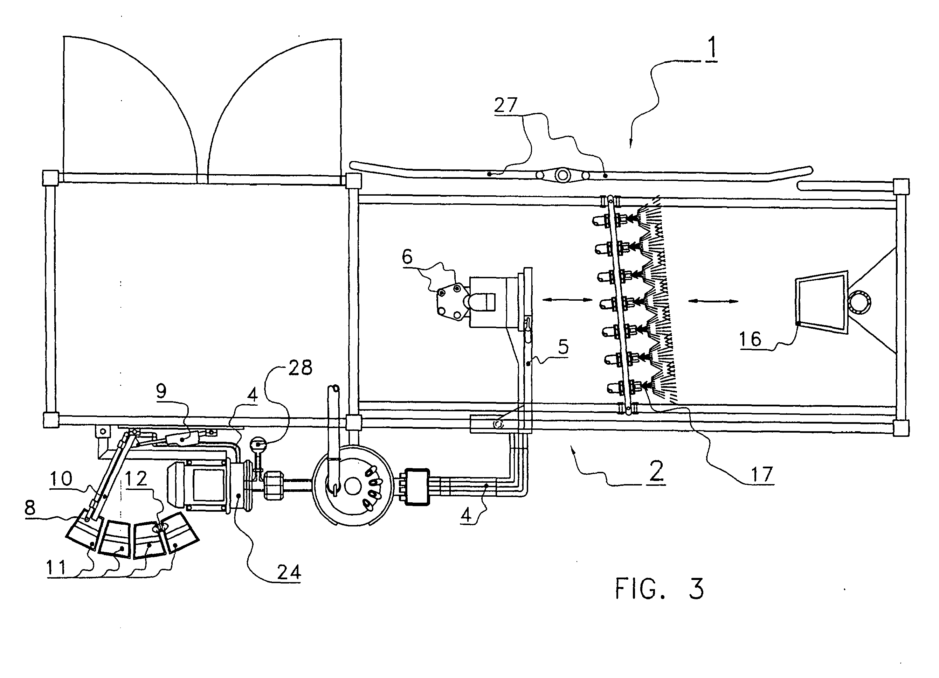

The milking parlour 1 may be provided with a number of containers 11 (see Figures 2 and 3), each suitable for containing a particular sort of used rinsing liquid. For the purpose of discharging particular rinsing liquids, the separation arm 10 can then be moved to above a relevant container 11 by automatic operation of the cylinder 9. There is thus provided a possibility of waste processing, and particular sorts of used rinsing liquid, such as a base, acid or chlorine solution, can be collected for being processed.

As shown in Figure 2, the nozzle 8 is located at a small distance above the containers 11. For the purpose of ensuring in this embodiment that, besides the discharge of the rinsing liquid into the containers 11, the exterior of the milking parlour 1 is cleaned, the containers 11 may for example be designed movably. Alternatively there may also be provided a spreading plate 12, the nozzle 8 being movable to above said spreading plate 12. The spreading plate 12 then ensures a spreading of the rinsing liquid or the cleaning foam over the exterior of the milking parlour 1. It will be obvious that the containers can alternatively also be automatically closable, and that the spreading plate can also be used differently than in combination with the containers.

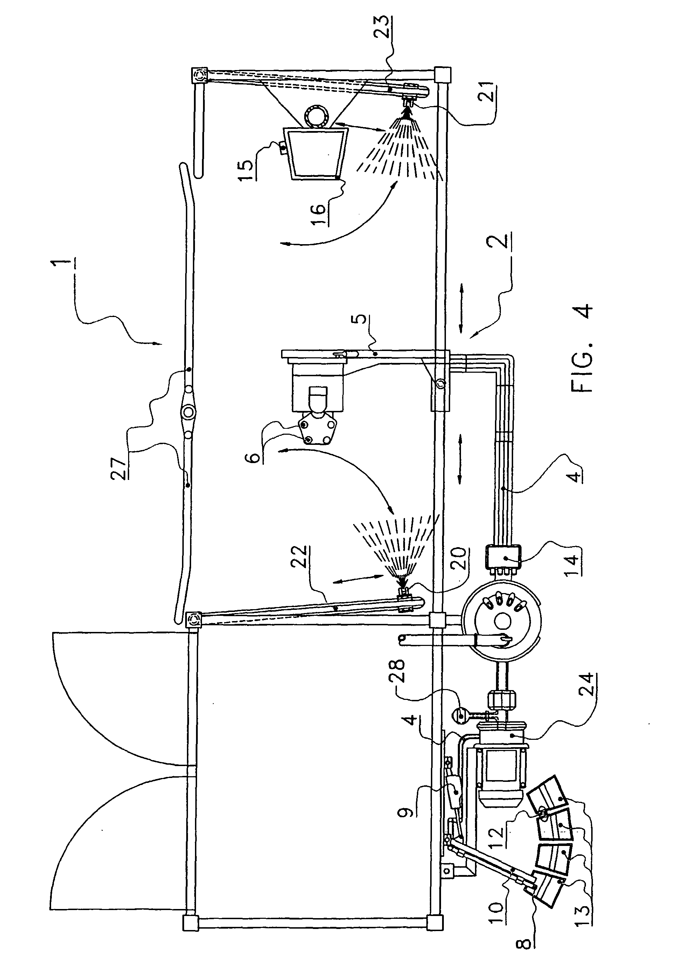

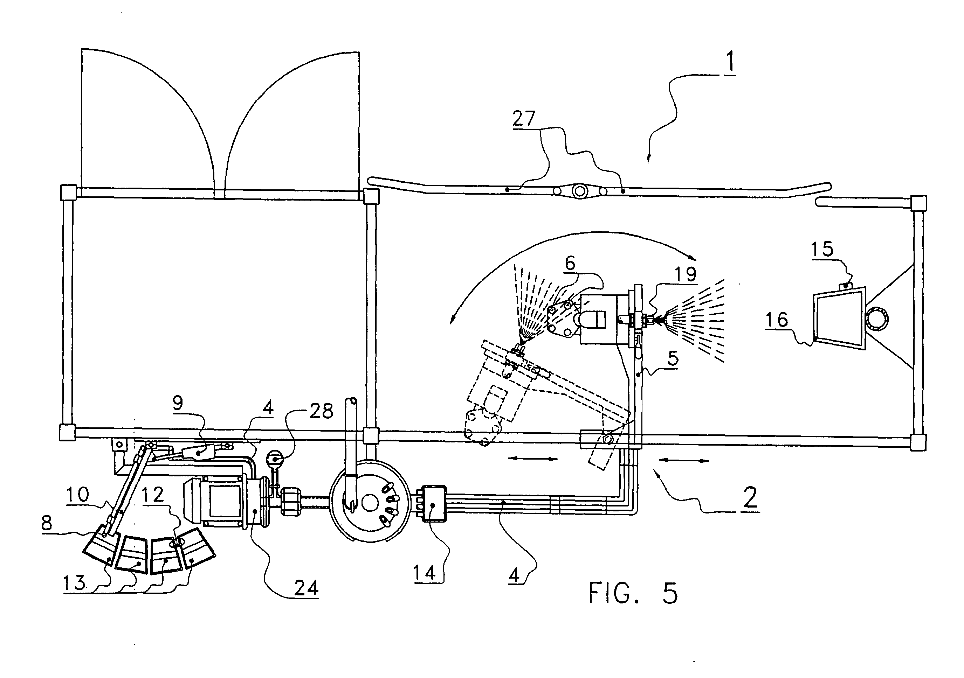

The milking parlour 1 is provided with a number of containers 13 (see Figures 4 and 5), each suitable for containing a particular- sort of milk obtained, such as colostrum, milk containing blood, antibiotics, or the like. These sorts of milk then flow to the outlet 8 via the milk lines 4 of the teat cups 6. By automatic operation of the separation arm 10 the sorts of milk can then be discharged into the relevant containers 13. In this manner the sort of milk obtained can be separated per animal, if desired, and is not collected in one sole container. The movement of the separation arm 10 may be controlled with the aid of determining means 14 for determining the sort of rinsing liquid or cleaning liquid used or the sort of milk obtained. In the case of the sort of milk obtained, the control of the separation arm is preferably partially realized with the aid of data from an animal identification device 15 that is disposed for example on a feeding trough 16.

There are preferably provided (non-shown) contents-measuring means for measuring the contents of the source 28 of cleaning foam and possibly of the containers 11, 13. The contents-measuring means can emit a control signal respectively an indication signal for automatic control of interchanging the source or the containers respectively for giving an indication to a farmer, for example on a display, via a sound, or via the mobile telephone of the relevant farmer, or to a service department. The contents-measuring means may for example be constituted by weighing means or means for determining the level of the liquid in the source and/or the containers.

According to the embodiment of Figure 1, it is also possible, although not shown in the drawing, that the nozzle 8 is movable to above the inlet of a line, said line conveying the cleaning foam or the rinsing liquid to at least one nozzle 17. Said nozzle 17 is movably disposed relative to the milking parlour 1. This movability may be obtained for example by fastening to a rail 18. The movement over the rail 18 is such that at least substantially the entire bottom 3 of the milking parlour 1 can be cleaned by the nozzle 17. For the purpose of increasing the cleaning range of the foam-cleaning, each of the nozzles is preferably movably suspended. The movement may be a driven movement, but is preferably automatically controlled by the force of the squirt of foam.

Besides being movably fastened to a rail, a nozzle 19 may also be fastened to the robot arm 5, as shown in Figure 5. By the movement of the robot arm 5, schematically shown by the pivotal movement of the position indicated by solid lines to the position indicated by broken lines, the entire bottom 3 of the milking parlour 1 can be covered. It is noticed that, if the nozzle 19 is fastened movably instead of rigidly to the robot arm 5, also other parts of the exterior of the milking parlour 1 can be cleaned with foam or be rinsed.

The nozzle 19 may be rigidly fastened to the robot arm 5, but the latter may also be equipped with a gripper for gripping the nozzle, so that the nozzle can be disposed in a storage element beside the milking robot and, if required, can be taken out therefrom by the gripper.

Figure 4 shows further nozzles 20 and 21 for cleaning the exterior of the milking parlour 1. Said nozzles 20, 21 may be fastened rigidly or movably to pivotable arms 22 respectively 23. The nozzles 20, 21 may alternatively be fastened rigidly or movably to non-movable parts of the frame of the milking robot 2 or other fixed components of the milking parlour 1.

Although the nozzles may be connected via lines to the outlet of the rinsing device for the interior of the milking robot, it is also possible for the nozzles to be coupled alternately to the source of foam or to a source of clean water, such as a cock of the water supply system.

For bringing the liquids under pressure there is provided the pump 24 that can be switched on automatically in case of cleaning.

In order to achieve that the cleaning is performed at a suitable point of time, there is provided a presence-detecting device 25 (Figures 1 and 2) for detecting the presence of an animal in the milking parlour 1. Upon detection of the presence of an animal in the milking parlour 1, the presence-detecting device 25 emits a signal to the cleaning device, which signal stops or prevents the operation of the cleaning device.

For cleaning in a simple manner only in the case of necessity, there is preferably provided a cleanliness-detecting device 26 (Figure 1) for detecting the cleanliness of the milking parlour 1. The cleanliness-detecting device 26 may comprise for example cameras. These cameras may be disposed in a fixed place in the milking parlour 1, but may also be disposed for example on the robot arm 5. The cleaning device is then controlled with the aid of data from the cleanliness-detecting device 26.

In order to prevent an animal from entering the milking parlour during cleaning, the cleaning device comprises a closing element 27 for closing the entrance to the milking parlour 1 when the cleaning device is in operation.

The rinsing device 4 may comprise a heating element, for example a heat exchanger, for heating the cleaning foam or the rinsing liquid. The heat exchanger may then make use for example of the heat that is released during the cooling of the milk.

The device is provided with a cleaning-starting element, in particular comprising a heating-starting element, for example constituted by the computer that is customarily present if there is provided a milking robot, said element starting the cleaning, in particular also the heating, by means of the foam or the liquid. The moment of starting the cleaning (in particular the heating) is situated preferably immediately after the receipt of an off-peak signal (elucidated hereinafter), or within a particular period of time after the receipt of the off-peak signal. Such an off-peak signal is emitted by the computer of the cleaning-starting element on the basis of historical visit data in the memory of the computer. If an analysing/calculating element calculates, with the aid of said historical data, that an off-peak period is expected within a predetermined period of time, such an off-peak signal is emitted.

A measuring element measures the temperature of the cleaning foam and emits a temperature signal to the heating-starting element. If the temperature signal indicates that a predetermined temperature value has been reached, the cleaning-starting element starts the actual cleaning. For this purpose the cleaning starting element is connected to the components of the device that are relevant for the cleaning.

The memory also provides a check of the cleaning, and comprises for this purpose heating data measured by the temperature-measuring element. The calculating element can further determine, on the basis of the heating data stored in the memory and the momentary temperature of the cleaning foam as measured by the measuring element, the remaining heating duration until the predetermined temperature value has been reached.

The device preferably operates as follows:

In the starting phase, the off-peak periods in the visits are manually inputted by the farmer, for example by means of a keyboard. The number of off-peak periods may be chosen by the farmer, but amounts to at least three from the point of view of hygiene.

The farmer may further input a period of time that will be situated between the expected beginning of an off-peak period and a previously to be emitted off-peak signal.

If, on the basis of the inputted data, an off-peak period will occur, first the off-peak signal is emitted. Said off-peak signal may ensure inter alia the activation of the heating element, so that the foam or the rinsing liquid is heated.

The detecting device detects whether or not an animal is present in the milking machine. If an animal is present, the cleaning device only starts the actual cleaning upon receipt of a signal from the detecting device indicating that the animal has left the milking parlour.

In order to achieve a more efficient use of the 5 milking parlour and the cleaning device, an identification system known per se determines the identity of an animal that reports at the milking machine for being milked. On the basis of the identity, it is possible to obtain an expected milking duration of the animal, which milking duration is stored in a 10 memory and is continuously updated, if desired. If said expected milking duration is longer than the remaining heating duration as determined with the aid of the measuring element and the calculating element, an entrance gate to the milking parlour remains closed when an animal reports.

15 Only if the expected milking duration is shorter than the remaining heating duration, the animal is still admitted to the milking parlour and can be milked, while at the same time the foam in the source of foam is heated.

If it is no longer possible to milk an animal, 20 then, after the animal has left the milking parlour, the actual cleaning is started at the moment when the cleaning foam has reached the desired temperature. The desired temperature depends on the sort of cleaning process applied.

The data in the memory in relation to the visits to 25 the milking machine are continuously updated for being able to take a changed visiting behaviour of the dairy animals into account.

In the cleaning process, the average cleaning duration (for example of the foam-cleaning including the 30 rinsing) is also taken into account. The off-peak periods in which the cleaning is performed are preferably the longest periods, so that the dairy animals experience little inconvenience as a result of the cleaning of the milking parlour. If there are more off-peak periods that are eligible for cleaning periods, other parameters may also determine the selection of those off-peak periods in which cleaning takes place. Preferably those off-peak periods are selected that coincide with periods in which energy costs are low (e.g. night-tariff supply).

In the case that certain components of the milking parlour can be cleaned or rinsed at a lower temperature, it is possible to ensure by a proper control that these components are cleaned or rinsed at the moment of reaching that temperature.

It will be obvious that the invention is not limited to the above-described embodiments, but that all sorts of modifications are possible within the scope of the claims. There may be provided for example a drying device for drying the exterior of the milking parlour after rinsing. This is in particular advantageous if also the operation space of the milking robot has to be cleaned. There may further be provided an additive element for adding additives to the cleaning foam and/or the rinsing liquid, so that for a specific cleaning a specific additive can be used. In this respect, for example, dirt solvents, soaking means, disinfecting means and the like may be taken into consideration. Adding additives preferably takes place automatically. For example, after a predetermined number of normal cleanings, each time a cleaning with a specific additive may take place. The additive element may further be controlled with the aid of data from the animal identification device, so that it is possible to clean the milking parlour in a specific manner after a visit of a specific animal to the milking parlour. It will further be obvious that there is preferably provided a computer that controls the functions of the cleaning device on the basis of data obtained. Additionally there may be provided an activation switch for manually activating the cleaning device, the cleaning itself not requiring further actions. Although the invention is described with reference to a rinsing device for cleaning the interior of the milking robot 2 by means of rinsing liquid, which rinsing device is also used for the foam-cleaning and the rinsing-cleaning of the exterior of at least a part of the milking parlour, it is also possible, of course, to use separate devices for this purpose.

## Claims

1. A cleaning device for cleaning the exterior of at least a part of a milking parlour (1), the milking parlour (1) comprising a milking robot (2) and a bottom (3) on which an animal to be milked can stand, **characterized in that** the cleaning device is provided with a source (28) of cleaning foam.

2. A cleaning device as claimed in claim 1, **characterized in that** the cleaning device is an automatic cleaning device.

3. A cleaning device as claimed in claim 1 or 2, **characterized in that** the cleaning devices comprises an element for bringing the cleaning foam under pressure.

4. A cleaning device as claimed in claim 3, **characterized in that** the element comprises a pump.

5. A cleaning device as claimed in any one of the preceding claims, **characterized in that** the cleaning device comprises a nozzle that is disposed in a fixed position relative to the milking parlour.

6. A cleaning device as claimed in any one of the preceding claims 1 to 4, **characterized in that** the cleaning device comprises a nozzle that is movably disposed relative to the milking parlour.

7. A cleaning device as claimed in claim 6, **characterized in that** the nozzle is fastened to a rail.

8. A cleaning device as claimed in claim 6 or 7, **characterized in that** the nozzle is fastened to a robot arm.

9. A cleaning device as claimed in any one of the preceding claims, **characterized in that** the cleaning device is provided with contents-measuring means for measuring the contents of the source of cleaning foam.

10. A cleaning device as claimed in claim 9, **characterized in that** the contents-measuring means emit a control signal respectively an indication signal.

11. A cleaning device as claimed in any one of the preceding claims, **characterized in that** the cleaning device is provided with a presence-detecting device for detecting the presence of an animal in the milking parlour, the presence-detecting device, upon detection of an animal in the milking parlour, emitting a signal to the cleaning device, which signal stops or prevents the operation of the cleaning device.

12. A cleaning device as claimed in any one of the preceding claims, **characterized in that** the cleaning device is provided with a cleanliness-detecting device for detecting the cleanliness of the milking parlour, the cleaning device being controlled with the aid of data from the cleanliness-detecting device.

13. A cleaning device as claimed in any one of the preceding claims, **characterized in that** the cleaning device comprises a closing element for closing the entrance to the milking parlour when the cleaning device is in operation.

14. A cleaning device as claimed in any one of the preceding claims, **characterized in that** the cleaning device comprises a rinsing device for rinsing the exterior of the milking parlour after foam-cleaning.

15. A cleaning device as claimed in any one of the preceding claims, **characterized in that** the cleaning device is provided with an additive element for adding additives to the cleaning foam.

16. A device as claimed in any one of the preceding claims, **characterized in that** the device is provided with a cleaning-starting element for starting the cleaning.

17. A device as claimed in claim 16, **characterized in that** the device is provided with a computer comprising a memory, the computer being suitable for storing the points of time of the visits of the animals to the milking machine in the memory, and **in that** the cleaning-starting element is activated by a cleaning-starting signal emitted by the computer, on the basis of historical data stored in the memory in relation to the points of time of the visits of the animals.

18. A device as claimed in claim 16 or 17, **characterized in that** the device is provided with an identification system for determining the identity of animals and for detecting that animals are visiting the milking parlour, the computer storing the points of time of the visits of the animals in the memory with the aid of data from the identification system.

19. A device as claimed in claim 17 or 18, **characterized in that** the computer comprises an analysing-unit for determining the off-peak periods in the visits to the milking parlour.

20. A device as claimed in claim 17, 18 or 19, **characterized in that** the average cleaning duration is stored in the memory of the computer.

21. A device as claimed in claim 20, **characterized in that,** with the aid of the historical data, the computer emits an off-peak signal indicating that an off-peak period is expected within a predetermined period.

22. A device as claimed in claim 21, **characterized in that**, on reaching the beginning of an off-peak period with an expected duration that is at least comparable with the average cleaning duration, the computer emits an activation signal for the cleaning-starting element.

23. A device as claimed in any one of the preceding claims 17 to 22, **characterized in that** the computer activates the cleaning-starting element three times a day.

24. A method of cleaning the exterior of at least a part of a milking parlour (1) the milking parlour (1) comprising a milking robot (2) and a bottom (3) on which an animal to be milked can stand, **characterized in that** the method comprises the step of applying a cleaning foam on at least said part of the milking parlour (1).

25. A method as claimed in claim 24, **characterized in that** the cleaning foam is applied at least on the lower part of the milking robot.

26. A method as claimed in claim 24 or 25, **characterized in that** the method comprises the step of determining off-peak periods in the visits to the milking parlour, the cleaning of at least said part of the milking parlour taking place at least partially during an off-peak period.

## Patentansprüche

1. Reinigungsvorrichtung zum Reinigen des Äußeren zumindest eines Teiles eines Melkstandes (1), wobei der Melkstand (1) einen Melkroboter (2) und einen Boden (3) umfaßt, auf dem ein zu melkendes Tier stehen kann,
**dadurch gekennzeichnet, daß** die Reinigungsvorrichtung mit einer Quelle (28) für Reinigungsschaum versehen ist.

2. Reinigungsvorrichtung nach Anspruch 1,
**dadurch gekennzeichnet, daß** die Reinigungsvorrichtung durch eine automatische Reinigungsvorrichtung gebildet ist.

3. Reinigungsvorrichtung nach Anspruch 1 oder 2,
**dadurch gekennzeichnet, daß** die Reinigungsvorrichtung ein Element zum Beaufschlagen des Reinigungsschaumes mit Druck umfaßt.

4. Reinigungsvorrichtung nach Anspruch 3,
**dadurch gekennzeichnet, daß** das Element eine Pumpe umfaßt.

5. Reinigungsvorrichtung nach einem der vorhergehenden Ansprüche,
**dadurch gekennzeichnet, daß** die Reinigungsvorrichtung eine Düse umfaßt, die relativ zu dem Melkstand in einer festen Position angeordnet ist.

6. Reinigungsvorrichtung nach einem der vorhergehenden Ansprüche 1 bis 4,
**dadurch gekennzeichnet, daß** die Reinigungsvorrichtung eine Düse umfaßt, die relativ zu dem Melkstand bewegbar angeordnet ist.

7. Reinigungsvorrichtung nach Anspruch 6,
**dadurch gekennzeichnet, daß** die Düse an einer Schiene befestigt ist.

8. Reinigungsvorrichtung nach Anspruch 6 oder 7,
**dadurch gekennzeichnet, daß** die Düse an einem Roboterarm befestigt ist.

9. Reinigungsvorrichtung nach einem der vorhergehenden Ansprüche,
**dadurch gekennzeichnet, daß** die Reinigungsvorrichtung mit einer Inhaltsmeßvorrichtung zum Messen des Inhalts der Quelle für Reinigungsschaum versehen ist.

10. Reinigungsmeßvorrichtung nach Anspruch 9,
**dadurch gekennzeichnet, daß** die Inhaltsmeßvorrichtung ein Steuersignal bzw. ein Anzeigesignal ausgibt.

11. Reinigungsvorrichtung nach einem der vorhergehenden Ansprüche,
**dadurch gekennzeichnet, daß** die Reinigungsvorrichtung mit einer Anwesenheitsermittlungsvorrichtung zur Ermittlung der Anwesenheit eines Tieres in dem Melkstand versehen ist, wobei die Anwesenheitsermittlungsvorrichtung bei Ermitteln eines Tieres in dem Melkstand ein Signal an die Reinigungsvorrichtung gibt, wobei das Signal den Betrieb der Reinigungsvorrichtung stoppt oder verhindert.

12. Reinigungsvorrichtung nach einem der vorhergehenden Ansprüche,
**dadurch gekennzeichnet, daß** die Reinigungsvorrichtung mit einer Sauberkeitsermittlungsvorrichtung zum Ermitteln der Sauberkeit des Melkstandes versehen ist, wobei die Reinigungsvorrichtung mit Hilfe von Daten der Sauberkeitsermittlungsvorrichtung gesteuert wird.

13. Reinigungsvorrichtung nach einem der vorhergehenden Ansprüche,
**dadurch gekennzeichnet, daß** die Reinigungsvorrichtung ein Schließelement zum Verschließen des Eingangs zu dem Melkstand umfaßt, wenn die Reinigungsvorrichtung in Betrieb ist.

14. Reinigungsvorrichtung nach einem der vorhergehenden Ansprüche,
**dadurch gekennzeichnet, daß** die Reinigungsvorrichtung eine Spülvorrichtung zum Spülen des Äußeren des Melkstandes nach der Schaumreinigung umfaßt.

15. Reinigungsvorrichtung nach einem der vorhergehenden Ansprüche,
**dadurch gekennzeichnet, daß** die Reinigungsvorrichtung mit einem Zusetzelement zum Zusetzen von Zusatzstoffen zu dem Reinigungsschaum versehen ist.

16. Reinigungsvorrichtung nach einem der vorhergehenden Ansprüche,
**dadurch gekennzeichnet, daß** die Vorrichtung mit einem Reinigungsstartelement zum Starten der Reinigung versehen ist.

17. Vorrichtung nach Anspruch 16,
**dadurch gekennzeichnet, daß** die Vorrichtung mit einem einen Speicher umfassenden Computer versehen ist, wobei der Computer geeignet ist, die Zeitpunkte der Besuche der Tiere in der Melkmaschine in dem Speicher zu speichern, und daß das Reinigungsstartelement von einem Reinigungsstartsignal aktiviert wird, das auf der Basis von historischen Daten, die in dem Speicher bezüglich der Zeitpunkte der Besuche der Tiere gespeichert sind, von dem Computer ausgegeben wird.

18. Vorrichtung nach Anspruch 16 oder 17,
**dadurch gekennzeichnet, daß** die Vorrichtung mit einem Identifikationssystem versehen ist, um die Identität von Tieren zu ermitteln und das Aufsuchen des Melkstandes durch Tiere zu detektieren, wobei der Computer die Zeitpunkte der Besuche der Tiere mit Hilfe von Daten von dem Identifikationssystem in dem Speicher speichert.

19. Vorrichtung nach Anspruch 17 oder 18,
**dadurch gekennzeichnet, daß** der Computer eine Analysiereinheit umfaßt, um die Belastungstal-Zeiträume von Besuchen in dem Melkstand zu ermitteln.

20. Vorrichtung nach Anspruch 17, 18 oder 19,
**dadurch gekennzeichnet, daß** die durchschnittliche Reinigungsdauer in dem Speicher des Computers gespeichert ist.

21. Vorrichtung nach Anspruch 20,
**dadurch gekennzeichnet, daß** der Computer mit Hilfe der historischen Daten ein Belastungstal-Signal ausgibt, das anzeigt, daß innerhalb eines vorgegebenen Zeitraumes ein Belastungstal-Zeitraum erwartet wird.

22. Vorrichtung nach Anspruch 21,
**dadurch gekennzeichnet, daß** der Computer zu Beginn eines Belastungstal-Zeitraumes von einer voraussichtlichen Dauer, die mit der durchschnittlichen Reinigungsdauer zumindest vergleichbar ist, ein Aktivierungssignal für das Reinigungsstartelement ausgibt.

23. Vorrichtung nach einem der vorhergehenden Ansprüche 17 bis 22,
**dadurch gekennzeichnet, daß** der Computer das Reinigungsstartelement dreimal pro Tag aktiviert.

24. Verfahren zum Reinigen des Äußeren zumindest eines Teiles eines Melkstandes (1), wobei der Melkstand (1) einen Melkroboter (2) und einen Boden (3) umfaßt, auf dem ein zu melkendes Tier stehen kann,
**dadurch gekennzeichnet, daß** das Verfahren den Verfahrensschritt des Aufbringens eines Reinigungsschaumes auf zumindest diesen Teil des Melkstandes (1) umfaßt.

25. Verfahren nach Anspruch 24,
**dadurch gekennzeichnet, daß** der Reinigungsschaum zumindest auf den unteren Teil des Melkroboters aufgebracht wird.

26. Verfahren nach Anspruch 24 oder 25,
**dadurch gekennzeichnet, daß** das Verfahren den Verfahrensschritt des Ermittelns von Belastungstal-Zeiträumen von Besuchen in dem Melkstand umfaßt, wobei die Reinigung zumindest dieses Teiles des Melkstandes zumindest teilweise während eines Belastungstal-Zeitraumes erfolgt.

## Revendications

1. Dispositif de nettoyage permettant de nettoyer l'extérieur d'au moins une partie d'une salle de traite (1), la salle de traite (1) comprenant un robot de traite (2), et un socle (3) sur lequel un animal à traire peut se tenir, **caractérisé en ce que** le dispositif de nettoyage est équipé d'une source (28) de mousse nettoyante.

2. Dispositif de nettoyage selon la revendication 1, **caractérisé en ce que** le dispositif de nettoyage est un dispositif de nettoyage automatique.

3. Dispositif de nettoyage selon la revendication 1 ou 2, **caractérisé en ce que** le dispositif de nettoyage comprend un élément permettant d'amener sous pression la mousse nettoyante.

4. Dispositif de nettoyage selon la revendication 3, **caractérisé en ce que** l'élément comprend une pompe.

5. Dispositif de nettoyage selon l'une quelconque des revendications précédentes, **caractérisé en ce que** le dispositif de nettoyage comprend une tuyère placée en position fixe relativement à la salle de traite.

6. Dispositif de nettoyage selon l'une quelconque des revendications précédentes 1 à 4, **caractérisé en ce que** le dispositif de nettoyage comprend une tuyère, placée de manière mobile relativement à la salle de traite.

7. Dispositif de nettoyage selon la revendication 6, **caractérisé en ce que** la tuyère est fixée à un rail.

8. Dispositif de nettoyage selon la revendication 6 ou 7, **caractérisé en ce que** la tuyère est fixée à un bras robotisé.

9. Dispositif de nettoyage selon l'une quelconque des revendications précédentes, **caractérisé en ce que** le dispositif de nettoyage est équipé de moyens de mesure destinés à mesurer le contenu de la source de mousse nettoyante.

10. Dispositif de nettoyage selon la revendication 9, **caractérisé en ce que** les moyens de mesure émettent un signal de commande respectivement un signal d'indication.

11. Dispositif de nettoyage selon l'une quelconque des revendications précédentes, **caractérisé en ce que** le dispositif de nettoyage est équipé d'un dispositif de détection de présence permettant de détecter la présence d'un animal dans la salle de traite, ledit dispositif de détection de présence, lorsqu'il détecte la présence d'un animal dans la salle de traite, émettant un signal vers le dispositif de nettoyage, lequel signal arrête ou empêche le fonctionnement du dispositif de nettoyage.

12. Dispositif de nettoyage selon l'une quelconque des revendications précédentes, **caractérisé en ce que** le dispositif de nettoyage est équipé d'un dispositif de détection de propreté permettant de détecter la propreté de la salle de traite, ledit dispositif de nettoyage étant commandé à l'aide de données fournies par le dispositif de détection de propreté.

13. Dispositif de nettoyage selon l'une quelconque des revendications précédentes, **caractérisé en ce que** le dispositif de nettoyage comprend un élément de fermeture permettant de fermer l'entrée de la salle de traite lorsque le dispositif de nettoyage fonctionne.

14. Dispositif de nettoyage selon l'une quelconque des revendications précédentes, **caractérisé en ce que** le dispositif de nettoyage comprend un dispositif de rinçage permettant de rincer l'extérieur de la salle de traite après le nettoyage à la mousse.

15. Dispositif de nettoyage selon l'une quelconque des revendications précédentes, **caractérisé en ce que** le dispositif de nettoyage est équipé d'un élément d'adjonction permettant d'ajouter des additifs à la mousse nettoyante.

16. Dispositif selon l'une quelconque des revendications précédentes, **caractérisé en ce que** le dispositif est équipé d'un élément de démarrage du nettoyage permettant de démarrer le nettoyage.

17. Dispositif selon la revendication 16, **caractérisé en ce que** le dispositif est équipé d'un ordinateur comprenant une mémoire, l'ordinateur permettant de garder en mémoire les heures de fréquentation des animaux à la machine à traire, et **en ce que** l'élément de démarrage du nettoyage est activé par un signal de démarrage du nettoyage émis par l'ordinateur, sur la base de données historiques stockées dans la mémoire relatives aux heures de fréquentation des animaux.

18. Dispositif selon la revendication 16 ou 17, **caractérisé en ce que** le dispositif est équipé d'un système d'identification permettant de déterminer l'identité des animaux et de détecter la présence des animaux dans la salle de traite, l'ordinateur stockant en mémoire les heures de fréquentation des animaux à l'aide des données fournies par le système d'identification.

19. Dispositif selon la revendication 17 ou 18, **caractérisé en ce que** l'ordinateur comprend une unité d'analyse permettant de déterminer les périodes creuses de fréquentation de la salle de traite.

20. Dispositif selon la revendication 17, 18 ou 19, **caractérisé en ce que** la durée moyenne de nettoyage est stockée dans la mémoire de l'ordinateur.

21. Dispositif selon la revendication 20, **caractérisé en ce que**, à l'aide des données historiques, l'ordinateur émet un signal d'heure creuse indiquant qu'une période creuse est prévue dans une période prédéterminée.

22. Dispositif selon la revendication 21, **caractérisé en ce que**, lorsque arrive le début d'une période creuse dont la durée prévue est au moins comparable à celle de la durée moyenne de nettoyage, l'ordinateur émet un signal d'activation de l'élément de démarrage du nettoyage.

23. Dispositif selon l'une quelconque des revendications 17 à 22, **caractérisé en ce que** l'ordinateur active l'élément de démarrage du nettoyage trois fois par jour.

24. Procédé de nettoyage de l'extérieur d'au moins une partie d'une salle de traite (1), la salle de traite (1) comprenant un robot de traite (2) et un socle sur lequel l'animal à traire peut se tenir, **caractérisé en ce que** le procédé comprend l'étape consistant à appliquer une mousse nettoyante sur au moins ladite partie de la salle de traite (1).

25. Procédé selon la revendication 24, **caractérisé en ce que** la mousse nettoyante est appliquée au moins sur la partie inférieure du robot de traite.

26. Procédé selon la revendication 24 ou 25, **caractérisé en ce que** le procédé comprend l'étape consistant à déterminer les périodes creuses de fréquentation de la salle de traite, le nettoyage d'au moins ladite partie de la salle de traite s'effectuant, au moins partiellement, pendant une période creuse.
